# EUROPEAN PATENT SPECIFICATION

(11) **EP 3 243 402 B1**
(45) Date of publication and mention of the grant of the patent: **10.07.2019**
(21) Application number: 17170719.3
(22) Date of filing: 11.05.2017
(51) Int. Cl.: A45C 3/06, A45C 5/02, B29C 45/00

(54) **PROCESS FOR MAKING A PLASTIC BAG AND PLASTIC BAG OBTAINED BY MEANS OF SUCH PROCESS**
VERFAHREN ZUR HERSTELLUNG EINES KUNSTSTOFFBEUTELS UND DURCH SOLCH EIN VERFAHREN HERGESTELLTER KUNSTSTOFFBEUTEL
PROCÉDÉ DE FABRICATION D'UN SAC EN PLASTIQUE ET SAC PLASTIQUE OBTENU SELON LEDIT PROCÉDÉ

(30) Priority: 12.05.2016 IT UA20163401
(43) Date of publication of application: 15.11.2017
(73) Proprietor: BORSA VENETA S.R.L., 35030 Selvazzano Dentro (PD) (IT)
(72) Inventor: Dal Martello, Ivano, 35020 Ponte S. Nicolò (PD) (IT)
(74) Representative: Gallo, Luca

(56) References cited:
- CN-U- 204 838 375
- FR-A- 580 010
- GB-A- 2 337 450
- US-A1- 2014 216 874
- US-A1- 2015 083 288

## Description

### Field of application

The present invention regards a process for making a plastic bag and a plastic bag obtainable by means of such process, according to the preamble of the respective independent claims.

The present bag and process are inserted in the fashion field, i.e. in the field of bag articles.

The bag produced by means of the process, object of the present invention, can be made in many different colors and shapes in order to comply with many disparate fashion trends.

The bag, object of the present patent, is advantageously of shopper type, or provided with handles for manual support or for the insertion of the forearm.

The invention is therefore inserted in the context of the industrial field of fashion, and in particular in the field of production of bags made of plastic material.

### State of the art

US 2015 083 288 discloses a bag comprising an inner case and an interchangeable outer shell having a pair of half sections.

As is known, a bag particularly geared towards a young clientele was recently introduced on the market, composed of an external support shell made of semi-rigid plastic material, of a fabric bag positioned inside an external support shell, and of two handles fixed to the external support shell.

More in detail, the external support shell constitutes an exoskeleton of the structure of the bag with concave shape, defining a containment space open at an upper opening thereof.

The support shell is usually provided with two main walls substantially parallel to each other, connected by two lateral connection walls adapted to form, with the main walls, a single annular wall without interruption.

The support shell also comprises a bottom wall in a single body with the aforesaid walls and continued by means of a usually orthogonal bend of the lower edges of the same main and lateral walls.

It is important to observe that the above-described support shell of the plastic bags of known type is provided with a single concavity, internal bends or protuberances not being provided in the normal configuration of the support shell not stressed by external forces.

The upper opening of the support shell is defined by the upper edges of the aforesaid main and lateral walls and allows access to the containment space.

The fabric bag is constrained inside the external support shell, e.g. by means of suitable retention means, and defines the volume available for the user for containing his/her own items. In turn, the fabric bag has an opening at the upper opening of the external support shell that is usually recloseable with a zipper.

In particular, the two handles of the bag of known type are substantially composed of two flexible elongated elements, such as two cord sections, i.e. two elongated straps made of leather or of eco-leather. Each elongated element has two ends mechanically connected to the main walls at their upper edge, by means of anchorage means such as screws.

The latter advantageously also make, at the same time, means for retaining the bag.

The above-described process for making bags of known type provides that the external support shell is obtained by means of injection molding of plastic material, in particular of EVA which is expanded during the process of molding in a shaped mold provided with a single concave molding chamber.

More in detail, the mold is composed of two movable concave half-molds and a fixed convex portion, positioned inside the two concave half-molds and with form analogous to that of the shell that one wishes to obtain.

In particular, between the two concave half-molds and the convex portion, the molding chamber with concave shape is defined, according to the bag model that one wishes to make. Once the plastic material has been formed, the mold is opened, by moving apart the two concave half-molds, and the support shell is easily extracted from the convex portion by exploiting the concave shape of the molding chamber. In other words, given that there is no narrowing in the molding chamber starting from the bottom wall towards the upper opening, it is easy to extract the EVA foam layer from the molding chamber.

In addition, during the moving away of the two concave half-molds, the plastic material undergoes a rapid expansion due to the decompression, the EVA increases its volume and tends to be spontaneously released from the convex portion of the mold. Afterward, the bag is inserted inside the support shell and is constrained to the latter by means of the abovementioned fixing means. The handles are then fixed to the main walls due to the anchorage means advantageously constituted by screws which are inserted in through holes made on the same walls and at the ends of the handles and which are engaged in nuts provided at the internal faces of the same main walls.

Such process for making bags of known type has in practice shown that it does not lack drawbacks.

The main drawback lies in the fact that the external support shell obtained following the aforesaid molding step can only have very simple geometric forms, in particular it can only have convex three-dimensional geometric forms.

In particular, the molding chamber of the mold cannot have recesses that bring the support shell formed of EVA to interfere with the half-molds, limiting the possibility of a facilitated extraction thereof.

A further drawback of the process of known type described up to now lies in the fact that it is not possible to make bags which comprise a support shell that is completely recloseable at the upper opening, since it would not be possible to extract such shell from the convex portion of the mold.

Consequently, one drawback of the bag obtained by means of such process of known type lies in the fact that its external support shell is aesthetically limited to assuming only simple forms, i.e. with very regular concavities, externally of limited and unsatisfactory design.

### Presentation of the invention

In this situation, the problem underlying the present invention is therefore that of overcoming the drawbacks manifested by the process of known type by providing a process for making a bag which allows, in a very versatile manner, obtaining bags of various shapes according to the desired design.

A further object of the present invention is to provide a process for making a bag provided with an external support shell with shape that is not particularly limited by the provided EVA molding process.

A further object of the present invention is to provide a process for making a bag which is inexpensive, using low-cost raw materials, and which is entirely reliable in operation. A further object of the present invention is to provide a bag made of plastic material which is aesthetically pleasing, since it can be obtained with a wider range of shapes with respect to those currently attainable with the EVA molding processes of known type.

### Brief description of the drawings

The technical characteristics of the invention, according to the aforesaid objects, can be clearly seen in the contents of the below-reported claims and the advantages thereof will be clearer in the following detailed description, made with reference to the enclosed drawings, which represent a merely exemplifying and non-limiting embodiment of the invention, in which:

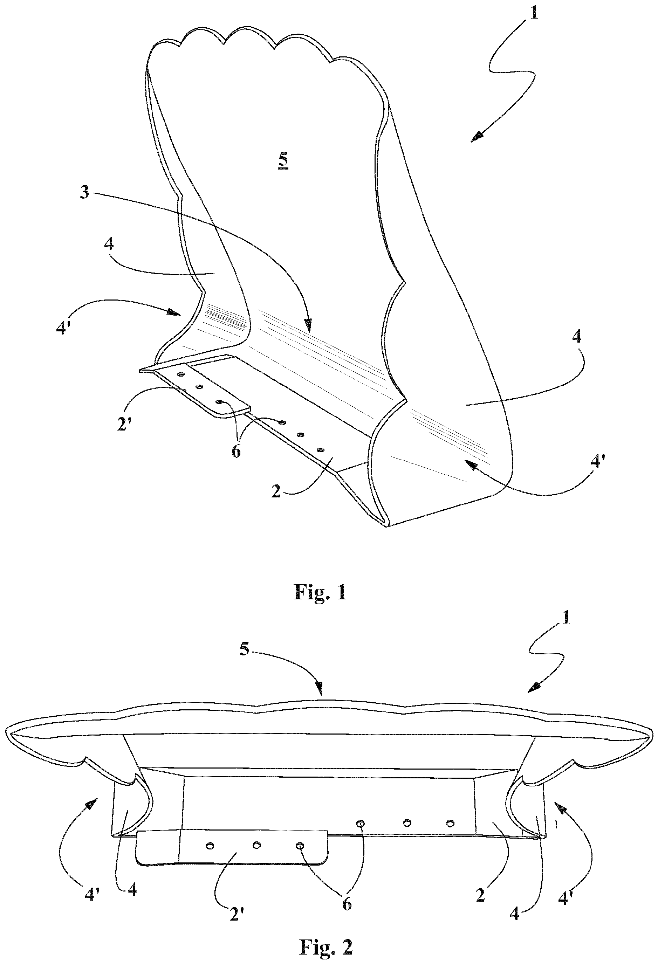

- figure 1 shows a perspective view of a detail of the bag according to the present invention relative to a support half-shell obtained by means of the process according to the invention;
- figure 2 shows a top axonometric view of the support half-shell illustrated in figure 1;
- figure 3 shows a side axonometric view of the bag according to the present invention comprising the complete support shell obtained by joining two support half-shells together;
- figure 4 shows a detail of the support shell relative to means for joining the two support half-shells provided at a bottom wall thereof;
- figure 5 shows an embodiment variant of the means for joining the two support half-shells;
- figures 6a - 6i show some examples of connection means selected for the means for joining the two support half-shells, provided at a bottom wall thereof;

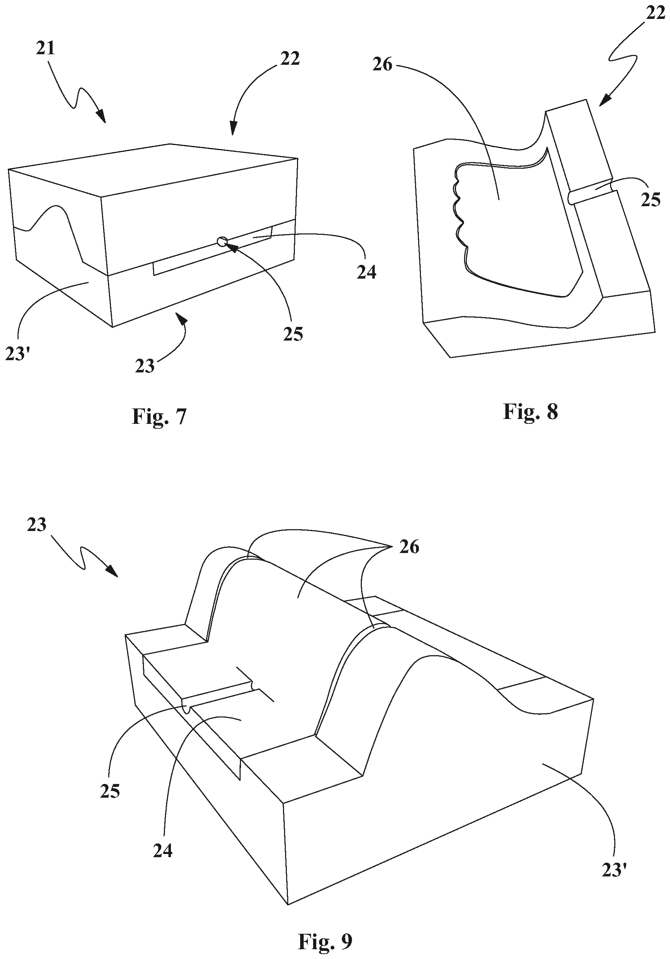

- figure 7 shows an axonometric view of a mold provided in a molding step of the attainment process according to the invention;
- figure 8 shows an axonometric view of a first half-mold of the mold illustrated in figure 7;
- figure 9 shows an axonometric view of a second half-mold of the mold illustrated in figure 7, in particular complementary to the first half-mold of figure 8;

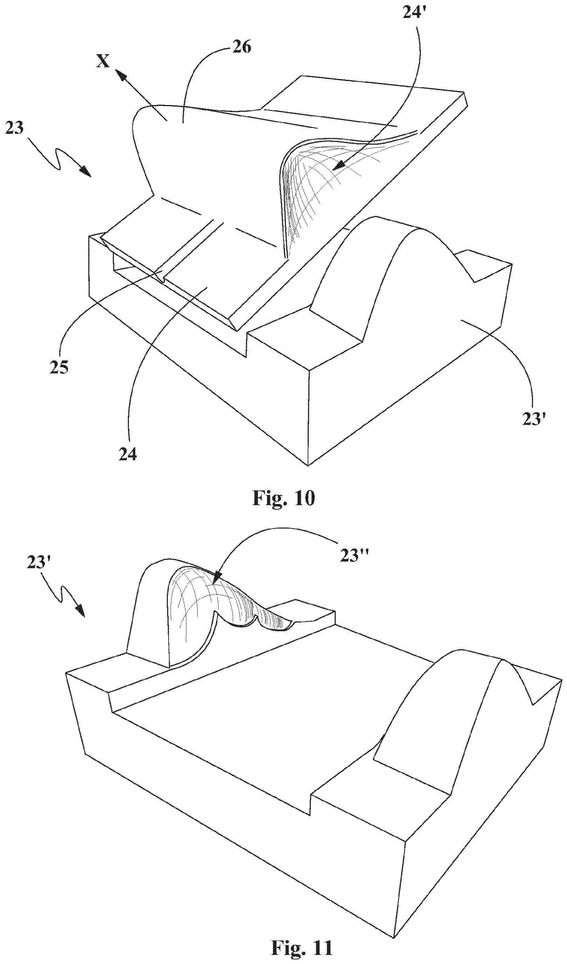

- figure 10 shows an axonometric view of the second half-mold illustrated in figure 9, highlighting an additional molding body thereof;
- figure 11 shows an axonometric view of a support base of the second half-mold illustrated in figure 10.

### Detailed description of a preferred embodiment

Hereinbelow, the process for making a plastic bag and the plastic bag will both be described; the plastic bag is advantageously obtainable by means of such process, and both are object of the present invention.

Initially, the process for making the plastic bag, object of the present invention, provides for a step of molding a support shell made of plastic material.

In general, the aforesaid plastic material selected for the support shell is a rubbery material susceptible of being subjected to a process of hot vulcanization during the molding step, such as an ethylene propylene polymer.

In particular, the plastic material selected for the support shell is a rubbery material, and more particularly ethylene vinyl acetate (hereinbelow EVA, in accordance with the technical jargon of the field), and more particularly ethylene vinyl acetate foam (EVA foam).

Hereinbelow, reference will be made to ethylene vinyl acetate as the material selected for the support shell of the bag, even if it must be intended that the material in question can be differently selected (with the limit that it be a vulcanizable rubbery material), without departing from the scope of the present patent.

Advantageously, ethylene vinyl acetate is collected in granular or scale form and is previously admixed with for example sulphur, for the process of hot vulcanization that occurs during the molding step, as will be described in detail hereinbelow.

The EVA admixed with sulphur is then preheated and brought to a softening temperature, in particular in a temperature range preferably comprised between 60°C and 100°C. Sulphur renders EVA soft and elastic and raises the melting point thereof, and thus the EVA does not melt during such preheating. Indeed, sulphur forms chemical crosslinking that bind together the polymer chains constituting EVA, making the plastic material actually indissoluble and thus much stronger and elastic than the non-admixed ethylene vinyl acetate.

Advantageously, the molding step provides for the arrangement of a mold 21 which comprises at least one first half-mold 22 and a second half-mold 23, which together define a shaped molding chamber 26 that has a form substantially analogous to that of the support shell that one wishes to obtain.

In accordance with a different embodiment, at least one of the two half-molds 22, 23 can comprise at least one additional molding body 24, intended to facilitate a step of extraction of the support shell, which will be described in detail hereinbelow.

In operation, in the aforesaid molding step, the EVA admixed with sulphur is injected in the shaped molding chamber 26, by means of actuation means, for example pumps hydraulically connected to the nozzles, or a worm screw, which inject such softened plastic material within the molding chamber 26 of the mold 21 through a supply hole 25.

Preferably, EVA is also admixed with dyes, in order to confer the desired coloring to the support shell.

Once formed, the plastic material is extracted from the shaped molding chamber 26, obtaining the external support shell of the bag.

Such support shell is semi-rigid and provided with two facing main walls 5, a bottom wall in a single body with the aforesaid main walls 5 and substantially transverse with respect to the latter, and an upper opening opposite the bottom wall.

Subsequently, the process provides for a step of inserting an object-holding bag 7 within the support shell of plastic material. Such object-holding bag 7 is mechanically connected to the support shell by means of retention means, e.g. shaped hooks or screws.

Advantageously, the object-holding bag 7 is provided with an opening, at the upper opening of the support shell, and has an internal containment space, which defines the volume available for the user for containing objects. The object-holding bag 7 can preferably have internal pockets, secondary spaces and/or dividers, in order to improve the organization of the containment space and assist the user in the daily use of the bag 10.

Preferably, the object-holding bag 7 can be provided with a zipper 8 placed at the upper opening, by means of which it is possible to easily open and close the object-holding bag 7.

According to the idea underlying the present invention, the aforesaid step of molding the support shell provides for a first step of molding a first support half-shell 1 and a second step of molding a second support half-shell 1' preferably of form analogous to that of the first support half-shell 1. Preferably, moreover, the two half-shells 1, 1' can differ due to a different coloring, in order to comply with user tastes.

Each support half-shell 1, 1' is provided with a main wall 5 and with a bottom portion 2, which are connected together in a single body by means of a concavity 3. In addition, each half-shell 1, 1' is provided with a lateral wall portion 4, it too connected in a single body with the main wall 5 and the bottom portion 2 at their lateral edges by means of a substantially orthogonal bend of such lateral edges, and is adapted to form a containment side. In particular, the lateral wall portion 4 is extended for at least one fraction of the length of the lateral edge of the bottom portion 2 and for at least one fraction of the length of the corresponding lateral edge of the main wall 5 of each support half-shell 1, 1' and is adapted to laterally delimit the internal volume of each support half-shell 1, 1'. Each half-shell 1, 1' also has a first free edge of the main wall 5, and a second free edge of the bottom portion 2.

The first and second step of molding respectively the first and second support half-shell 1, 1' provide for arranging the aforesaid mold 21, which is provided with the molding chamber 26 defined between its two half-molds 22, 23, and if provided, the molding chamber 26 can also be defined by the aforesaid additional molding body 24 of one of the two half-molds 22, 23, in accordance with the aforesaid embodiment.

More in detail, the first half-mold 22 has substantially concave shape and the second half-mold 23 has a substantially convex shape complementary to that of the first half-mold 22. The two half-molds 22, 23 are susceptible to be moved between a closed configuration in which they delimit the molding chamber 26 of form analogous to the concavity 3 of each support half-shell 1, 1', and an open configuration in which the half-molds 22, 23 are placed in a distal position with respect to each other.

Initially, in the first and in the second step of molding respectively the first and second support half-shell 1, 1', the mold 21 is heated up to reaching a temperature preferably comprised in a range between 150°C and 200°C.

The two half-molds are brought to the closed configuration, and subsequently an injection step is provided, in which the EVA admixed with sulphur and preheated is injected into the molding chamber 26 through the supply hole 25. The plastic material comes into contact with the walls of the molding chamber 26, which are at high temperature, in particular comprised in the aforesaid range.

The presence of sulphur (or other analogous additives) within the material and the high temperature of the molding chamber 26 cause the process of vulcanization of the rubber that constitutes the material.

More in detail, the plastic material at the end of the vulcanization process takes the name of ethylene vinyl acetate foam (EVA foam) and is soft and impermeable and has the external surfaces smooth and compact, and simultaneously the material internally has a cellular and crosslinked structure, i.e. substantially composed of a plurality of closed cells containing gas, each adjacent and connected to the others, in a substantially honeycomb structure. Following such process, the EVA foam loses the substantially plastic characteristics typical of the non-vulcanized material, in order to acquire substantially elastic characteristics.

In particular, the vulcanization process decreases the density of the material subject thereto, hence increasing the volume thereof. At the end of the molding step, the EVA is forced to maintain the shape of the molding chamber 26, given that it is unable to substantially increase in volume. Therefore, the pressure inside the vulcanized rubbery material increases.

Of course, ethylene vinyl acetate can also be admixed with other materials and/or compounds that cause the vulcanization thereof, such as lead oxide. In addition, before the aforesaid molding step, the addition of further additives can be provided, such as accelerants, ultra-accelerants, activators, reinforcing agents, inhibitors, anti-oxidants, anti-aging agents and completing products, without departing from the scope of the present patent.

Subsequently, the process according to the invention provides for an extraction step, in which once the plastic material is formed and completely vulcanized, the mold 21 is brought into the open configuration and the first support half-shell 1 and the second support half-shell 1' are extracted along an extraction direction X substantially without interfering with the mold 21.

In particular, the main wall 5 is provided with at least one first substantially flat portion and the bottom portion 2 of each support half-shell 1, 1' is provided with at least one second substantially flat portion, between which the concavity 3 is defined. The extraction direction X of each support half-shell 1, 1' is substantially along the bisector of the concavity 3, in opposite sense with respect to the center of curvature of the concavity 3 itself.

Advantageously, during the extraction step, at the movement of the mold 21 into the open configuration, the EVA foam contained therein (at high pressure, as described above) undergoes a rapid decompression, since it is freed from the constraints composed of the walls of the molding chamber 26, and therefore quickly increases in volume in a spontaneous manner. In particular, the total volume of the plastic material constituting each support half-shell 1 increases by 15 - 60 %.

Such increase in volume forces the plastic material to exit from the molding chamber 26, facilitating the extraction of each half-shell 1, 1' even in the presence of small recesses in the molding chamber 26 which form undercuts.

In accordance with the aforesaid further embodiment, at least one first half-mold 22 of the two half-molds 22, 23 can be provided with an additional molding body 24, which is advantageously shaped in a form analogous to that of the concavity 3 of each half-shell 1, 1'. In particular, the additional molding body 24 is provided with at least one recess 24', preferably lateral and analogous to a bellows-shaped recess 4' which can be provided on the lateral wall portion 4 of each support half-shell 1, 1'.

Advantageously, in accordance with the embodiment depicted in the enclosed figures, the second half-mold 23 with substantially convex form comprises a support base 23', which is provided with at least one lateral protuberance 23" counter-shaped with respect to the recess 24' of the additional molding body 24. Such additional molding body 24 is advantageously in an operating position, in particular housed on the support base 23' during the molding step, in which the two half-molds 22, 23 are placed in the closed configuration and delimit the molding chamber 26.

During the aforesaid extraction step, the half-molds 22, 23 are positioned in the aforesaid open configuration, in which the vulcanized plastic material undergoes a first rapid decompression, increasing in volume in a direction substantially opposite that of the concavity 3, since it is no longer constrained by the first half-mold 22.

Then, the additional molding body 24 is brought into a non-operating position, distal with respect to the support base 23' of the second half-mold 23, simultaneous with the support half-shell 1, substantially without interfering with the mold 21 itself, in a direction substantially along the extraction direction X, and simultaneously the vulcanized plastic material undergoes a second rapid decompression, which expands the lateral wall portions 4, releasing the recesses 4' (which represent undercut portions) from the recesses 24' of the additional molding body 24, hence allowing a facilitated extraction of the support half-shell 1.

In particular, the additional molding body 24 is moved by the second half-mold 23 by means of automatic members, or it can be manually moved by an operator. In the latter case, zippers are preferably provided which rotatably constrain the additional molding body 24 to the support base 23' of the second half-mold 23.

More in detail, during the extraction step, the increase in volume due to the aforesaid quick decompressions laterally pushes the bellows-shaped recesses 4' of the plastic material, releasing them from the recesses 24' of the additional molding body 24, such that, during extraction, there is little interference with the molding chamber 26 and this involves a small elastic deformation of the half-shell 1 thus formed. Of course, the process can provide for a plurality of molds 21 for a mass production of the support half-shells 1, 1'. In addition, molds 21 can be provided with many different forms for the production of a multiplicity of different shapes and sizes of the two support half-shells 1, 1', intended to form different models of the bag 10, object of the present invention.

Subsequently, the process, object of the invention, provides for a step of joining the support half-shells 1, 1' in order to form a complete support shell of the plastic bag 10.

Such joining occurs by means of coupling the two half-shells, placing them in contact with each other, in particular maintaining the concavities 3 of the two half-shells 1, 1' facing and thus defining a volume inside the support half-shells 1, 1' themselves. Such volume represents the internal volume of the plastic bag 10.

Preferably, the joining occurs by means of fixing means 9, which are placed at the second free edge of the bottom portion 2 of each support half-shell 1, 1'. In particular, flaps 2' are preferably provided at the bottom portion 2, which protrude with respect to the second free edge, tangentially with respect to the bottom portion 2 itself. Such flaps 2' of the first half-shell 1 are adapted to be coupled with the flaps 2' provided on the second support half-shell 1', and be superimposed on the bottom portion 2 of the second half-shell 1', and vice versa.

The step of joining the portions 1 of said external support shell is therefore obtained by means of coupling with superimposition of flaps 2' of the two support half-shells 1, 1' provided at the bottom portion 2 of each support half-shell 1, 1'.

With the term "superimposition of flaps" it must therefore be intended hereinbelow the superimposition of flaps 2' on the bottom wall 2 of the adjacent half-shell 1, 1', and/or the mutual superimposition of flaps 2'.

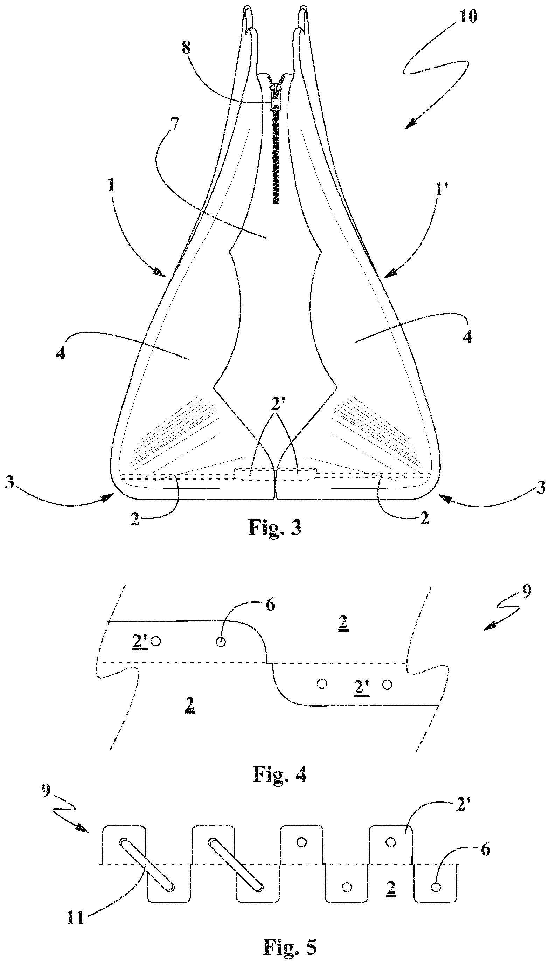

In accordance with a first embodiment of the flaps 2' illustrated in the enclosed figure 4, each bottom portion 2 of each half-shell 1 comprises a flap 2' superimposed on the bottom wall 2 of the other half-shell 1' and side-by-side another flap 2' of the other half-shell 1', in turn superimposed on the bottom wall 2 of the first half-shell 1.

In accordance with a further embodiment of the flaps 2' illustrated in the enclosed figure 5, each bottom portion 2 of each support half-shell 1, 1' comprises a plurality of indented flaps 2' and a plurality of projecting flaps 2', alternated with each other. Each projecting flap 2' of the first half-shell 1 is superimposed on the indented flap 2' of the bottom portion 2 of the second half-shell 2, by means of a finger joint.

In particular, such flaps 2' of each half-shell 1 are arranged for being side-by-side, adjacent to each other and superimposed on the corresponding bottom portion 2 of the other half-shell 1', once the two support half-shells 1, 1' are coupled, in accordance with that illustrated in the example of figure 3.

Advantageously, the flaps 2' and the bottom portion 2 of the first half-shell 1 have through holes 6, which are adapted to be aligned with corresponding through holes 6 made in the second facing half-shell 1', in accordance with that depicted in the examples illustrated in figures 4 and 5, which show two corresponding different embodiments, non-limiting of the fixing means 9.

Advantageously, the fixing means 9 comprise connection means adapted to be inserted in the through holes 6 and intended to mechanically constrain the flaps 2' of the first half-shell 1 with the bottom portion 2 of the second half-shell 1' facing thereto, and vice versa, forming the complete support shell, composed of a single body and without interruption.

Preferably, the connection means comprise laces 11, for example made of fabric, adapted to be inserted spiral-like within the through holes 6, constraining the bottom portions 2 through the entire length thereof, in accordance with the embodiment of figure 5.

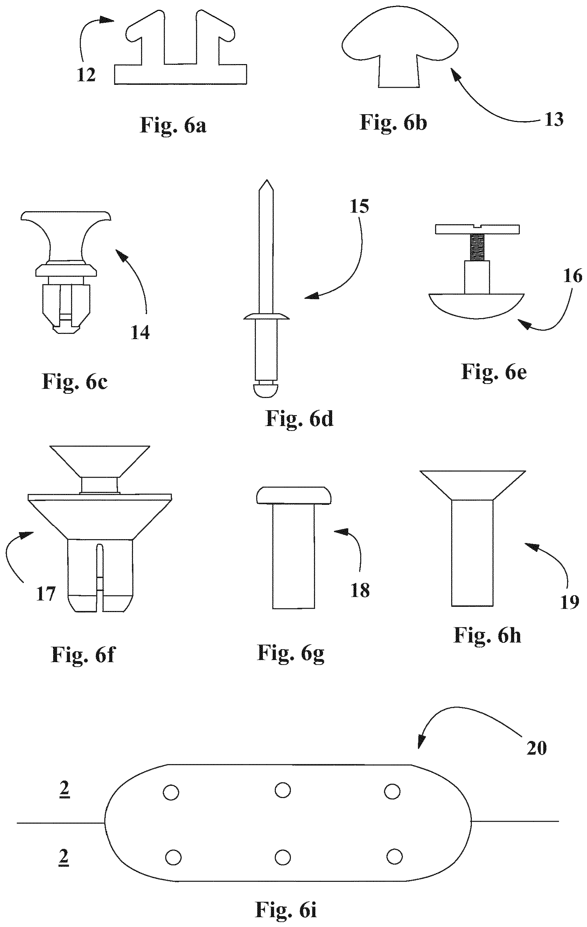

Otherwise, the connection means can comprise clips 12, elastic mushroom heads 13, snap rivets 14, tear rivets 15, threaded rivets 16, expansion rivets 17, round head rivets 18, countersunk-head rivets 19 or a strap of plastic material 20, it too having through holes 6 and/or release pins, in accordance with that represented in the embodiments illustrated in figures 6a - 6i.

Advantageously, once the support half-shells 1, 1' are mechanically connected in order to form the complete support shell, the lateral wall portions 4 of the two half-shells 1, 1' are situated two-by-two adjacent, orthogonal to the main walls 5 and define two facing lateral windows, through which it is possible to view the object-holding bag 7 from outside the support shell. In particular, the object-holding bag 7 can be selected having a coloring such to stand out with respect to the support shell, so as to further improve the aesthetic appearance of the bag 10. In addition, the two support half-shells 1, 1' can have different coloring.

Otherwise, the lateral wall portions 4 can be shaped such that, once the half-shells 1, 1' are joined, they are laterally joined by completely closing the lateral wall of the plastic bag 10, without substantially having lateral openings.

The upper opening can be constituted by an elongated slit, which remains defined between the upper free edges, at the main walls 5. Otherwise, in accordance with a further embodiment, the two support half-shells 1, 1' can be shaped such that once joined, the aforesaid upper edges are placed in abutment against each other, actually closing the aforesaid upper opening.

In accordance with such embodiment, the bag 10 is susceptible of being moved between an open configuration, in which the free edges at the main walls 5 of the support half-shells 1, 1' are manually moved apart, and a closed configuration, in which such free edges are placed in abutment against each other.

Therefore, upon movement of the half-shells 1, 1' into closed configuration, a complete closure of the bag 10 can be obtained with the lateral wall portions 4 that are laterally joined together, completely closing the lateral wall of the plastic bag 10. Advantageously, the external surfaces of the support shell can undergo a subsequent surface processing in order to increase the aesthetic value of the bag 10, for example embossing and/or photo etching.

Following the aforesaid step of inserting the object-holding bag 7, the process provides for a step of making two lateral handles.

Preferably, the two handles are substantially composed of two elongated elements, preferably flexible such as two cord sections, or two elongated straps made of leather or of eco-leather.

In an entirely conventional manner, the handles are mechanically connected at the main walls 5, in particular in proximity to the upper opening, by means of connection means analogous to those described above.

Otherwise, such step of making the lateral handles can be provided before the step of inserting the object-holding bag 7, or it can be provided following the molding step and before the joining step.

Advantageously, by means of the process described up to now, it is thus possible to make bags comprising a support shell made of plastic material which has complex shapes and which can have concavities, e.g. recesses with respect to the external profile of the support shell, without substantial limitations.

Also forming the object of the present invention is a plastic bag 10, which is advantageously obtained with the process described up to now and regarding which, for description simplicity, the already-indicated reference numbers will be maintained. The plastic bag 10, object of the invention, comprises a semi-rigid external support shell made of rubbery material, which is provided with two facing main walls 5, with a bottom wall in a single body with the main walls 5 and substantially orthogonal with respect to the latter, with an upper opening opposite the bottom wall, and with two lateral walls.

The plastic material selected for the support shell is a rubbery material, and more particularly ethylene vinyl acetate (hereinbelow EVA, in accordance with the technical jargon of the field), and more particularly ethylene vinyl acetate foam (EVA foam). Preferably, each lateral wall comprises two lateral wall portions 4 facing each other.

Advantageously, the plastic bag 10 also comprises an object-holding bag 7 positioned within the external support shell and constrained to the latter by means of retention means, and has an opening at the upper opening of the external support shell. In particular, such object-holding bag 7 internally delimits a containment space intended to contain objects of the final user.

According to the idea underlying the present invention, the support shell comprises two support half-shells 1, 1', coupled and constrained together, each of which comprising a main wall 5 and a bottom portion 2 of the aforesaid bottom wall.

The support half-shells 1, 1' are each provided with a first free edge of the main wall 5 at the upper opening and with a second free edge of the bottom portion 2.

Advantageously, the main wall 5 and the bottom portion 2 are substantially connected together in a single body by means of a concavity 3, which is extended from the second free edge of the bottom portion 2 up to the first free edge of the main wall 5 at the upper opening.

Advantageously, the support half-shells 1, 1' are constrained by means of fixing means 9, which are provided at the bottom portion 2, in order to join together joining flaps 2' placed at the second free edges of the bottom portions 2 of each support half-shell 1, 1'. Advantageously, the bag 10 comprises at least one handle, and preferably two, mechanically constrained to the main walls 5 of the external support shell in proximity to the upper opening by means of anchorage means, such as screws or hooks, pressure or expansion engagement elements.

Preferably, the two handles are substantially composed of two elongated elements, preferably flexible such as two cord sections, i.e. two elongated straps made of leather or of eco-leather.

Advantageously, each support half-shell 1, 1' comprises two lateral wall portions 4 that substantially face each other, in a single body with the main wall 5 and the bottom portion 2, and substantially orthogonal to the latter.

The bottom portions 2 of each support half-shell 1, 1' comprise flaps 2', which are coupled by means of the fixing means 9 with superimposition of at least two of such flaps 2'.

In accordance with the embodiments illustrated in the enclosed figures 4, 5, the bottom portion 2 of each half-shell 1 can comprise one or more flaps 2' superimposed on the bottom portion 2 of the other half-shell 1'.

In accordance with the embodiment illustrated in the enclosed figure 6i, the bottom portions 2 are joined by means of the superimposition of a strap-like joining flap 20 provided with holes aligned with corresponding holes 6 made in such bottom portions 2 and traversed by fixing means 9, e.g. rivets or pins, illustrated in the enclosed figures 6a - 6h.

The strap-like joining flap 20 can also be provided with a central zipper, placed parallel to the free edge of the bottom portions 2, susceptible of facilitating the opening of the two support half-shells 1, 1' during the normal use of the bag 10, object of the present invention.

The two half-shells 1, 1' being coupled each have a lateral wall portion 4 that is side-by-side the respective lateral wall portion 4 of the other half-shell. Such side-by-side lateral wall portions 4 together define a lateral window for viewing the object-holding bag 7 from outside the support shell.

Otherwise, the side-by-side lateral wall portions 4 can be mechanically connected, closing the lateral wall of the plastic bag 10, forming an external shell in a single body without interruption.

Preferably, each lateral wall portion 4 can have a bellows-like elastically pliable recess 4', which confers an excellent aesthetic result.

The plastic bag, object of the present invention, can therefore have a complex and aesthetically desirable and pleasing form.

The invention thus conceived therefore attains the pre-established objects.

## Claims

1. Process for making a plastic bag, comprising the following operating steps:
- a step of molding at least one support shell made of vulcanizable rubbery material, by means of injection of said plastic material in at least one shaped molding chamber (26) of a mold (21);
- a step of inserting an object-holding bag (7) within said support shell;
said molding step comprising at least one first step of molding a first support half-shell (1) and at least one second step of molding a second support half-shell (1'); said support half-shells (1, 1') being provided with a main wall (5) and with a bottom portion (2) connected together in a single body by means of a concavity (3);
said first and second step of molding respectively said first and said second support half-shell (1, 1') comprising:
- a step of injection of said vulcanizable rubbery material in said molding chamber (26), such molding chamber (26) defined between at least two half-molds (22, 23) placed in a closed configuration and is provided with a concave shape analogous to said concavity (3);
- an extraction step, in which said half-molds are moved from said closed configuration to an open configuration, in which said vulcanizable rubbery material is no longer compressed in the molding chamber and increases in volume by 15% - 60%, with consequent separation from said half-molds; said extraction step providing for moving away said first support half-shell (1) and said second support half-shell (1'), separated from said half-molds in open position;
- a step of joining said support half-shells (1, 1') by means of fixing means (9) at relative free edges of said corresponding bottom portions (2);
said process being **characterized in that** said step of joining said portions of said external support shell is obtained by means of coupling with mutual superimposition of flaps (2') of the two support half-shells (1, 1') provided at the bottom portion (2) of each support half-shell (1, 1'), and/or superimposition of flaps (2') of each support half-shell (1, 1') on the bottom wall (2) of the adjacent support half-shell (1, 1').

2. Process for making a bag according to claim 1, **characterized in that** said vulcanizable rubbery material constituting said support shell is ethylene vinyl acetate admixed with sulfur.

3. Process for making a bag according to claim 2, **characterized in that** said step of molding said external support shell is obtained with said mold heated, in particular in a temperature range comprised between 150°C and 200°C, and with said ethylene vinyl acetate admixed with sulfur injected preheated, in particular in a temperature range comprised between 60°C and 100°C; said ethylene vinyl acetate admixed with sulfur vulcanizing during said molding step inside said molding chamber.

4. Process for making a bag according to claim 1, **characterized in that** said main wall (5) is provided with at least a first substantially flat portion and said bottom portion (2) is provided with at least a second substantially flat portion, between which said concavity (3) is defined; the extraction direction (X) of each support half-shell (1, 1') being substantially along the bisector of said concavity (3), in opposite sense with respect to the center of curvature of said concavity (3).

5. Process for making a bag according to claim 1, **characterized in that** said molding step is obtained by injecting said plastic material in said molding chamber (26) defined by said mold (21) comprising said two half-molds (22, 23) and at least one additional molding body (24) provided with at least one recess (24') and movable with respect to a first half-mold (22) of said two half-molds (22, 23), between an operating position, in which during injection and with said half-molds (22, 23) it delimits the molding chamber (26), and a non-operating position, in which it is moved away from said first half-mold (22) in order to free said half-shell (1, 1') at said recess (24'), along a substantially moving away direction of the recess of said additional molding body (24) from said half-mold (22, 23).

6. Process for making a bag according to claim 5, **characterized in that** after said extraction step, said support half-shell (1) has a lateral wall portion (4) provided with a recess (4') that is elastically pliable with respect to the external profile of said lateral wall (4), at said recess (24') of said additional molding body (24) of said mold (21).

7. Plastic bag, comprising:
- a semi-rigid external support shell made of ethylene vinyl acetate foam, provided with two facing main walls (5), with at least one bottom wall in a single body with said main walls (5) and transverse with respect to the latter and an upper opening opposite said bottom wall;
- an object-holding bag (7) positioned inside said external support shell, having an opening at said upper opening of said external support shell;
said support shell comprises at least two coupled support half-shells (1, 1'), each of which comprising at least one of said main walls (5) and at least one bottom portion (2) of said bottom wall; said support half-shells (1, 1') each being provided with a first free edge of the main wall (5) at the upper opening and with a second free edge of the bottom portion (2);
said main wall (5) and said bottom portion (2) being made of a single body,
connected to each other substantially with a concavity (3) that is extended from said second free edge of said bottom portion (2) up to said first free edge of said main wall (5) at said upper opening;
fixing means (9) being provided for joining together joining flaps (2') placed at said second free edges of said bottom portions (2) of each support half-shell (1, 1');
said bag (10) being **characterized in that** said flaps (2') of said bottom portions (2) of said half-shells (1, 1') are coupled by means of said fixing means (9) with mutual superimposition of flaps (2') of the two support half-shells (1, 1'), and/or superimposition of flaps (2') of each support half-shell (1, 1') on the bottom wall (2) of the adjacent support half-shell (1, 1').

8. Bag according to claim 7, **characterized in that** each support half-shell (1, 1') comprises at least one lateral wall portion (4) made in a single body with said main walls (5) of each support half-shell (1, 1'); said lateral wall portions (4) defining a lateral window for viewing the object-holding bag (7) from outside said support shell.

9. Bag according to claim 7, **characterized in that** said fixing means (9) comprise connection means for the group comprising:
- laces (11);
- clips (12);
- double mushroom heads;
- pins with bendable metal clips;
- elastic mushroom heads (13);
- rivets;
- expansion rivets (17);
- snap rivets (17')
- tear rivets (15);
- threaded rivets (16);
- round head rivets (18);
- countersunk-head rivets (19);
- plastic strap provided with pins (20).

## Patentansprüche

1. Verfahren zur Herstellung eines Kunststoffbeutels, das die folgenden Schritte umfasst:
- einen Schritt des Abformens mindestens einer Trägerschale aus vulkanisierbarem gummiartigem Werkstoff durch Einspritzung des genannten Kunststoffs in mindestens eine profilierte Abformkammer (26) einer Form (21);
- einen Schritt des Einführens eines Aufbewahrungsbeutels (7) in das Innere der genannten Trägerschale;
wobei der genannte Abformschritt mindestens einen ersten Schritt des Abformens einer ersten Träger-Halbschale (1) und mindestens einen zweite Schritt des Abformens einer zweiten Träger-Halbschale (1') umfasst; wobei die genannten Träger-Halbschalen (1, 1') mit einer Hauptwand (5) und mit einem Bodenteil (2) ausgestattet sind, die durch einen Hohlraum (3) in einem Stück verbunden sind;
wobei der genannte erste und zweite Abformschritt der genannten jeweils ersten und zweiten Träger-Halbschale (1, 1') Folgendes umfasst:
- einen Schritt der Einspritzung des genannten vulkanisierbaren gummiartigen Werkstoffs in die genannten Abformkammer (26), wobei diese Abformkammer (26) zwischen in einer geschlossenen Konfiguration angeordneten mindestens zwei Formhälften (22, 23) definiert wird und mit einer zu dem genannten Hohlraum (3) homologen konkaven Form versehen ist;
- einen Schritt der Entnahme, bei dem die beiden Formhälften aus der genannten geschlossenen Konfiguration in eine geöffnete Konfiguration versetzt sind, in der der genannte vulkanisierbare gummiartige Werkstoff nicht mehr in der Abformkammer komprimiert ist und um 15 % - 60 % an Volumen zunimmt, wodurch er sich aus den genannten Formhälften löst; wobei dieser Entnahmeschritt das Entfernen der genannten ersten Träger-Halbschale (1) und der genannten zweiten Träger-Halbschale (1') vorsieht, die so in geöffneter Position von den genannten Formhälften gelöst sind;
- einen Schritt der Verbindung der genannten Träger-Halbschalen (1, 1') mit Hilfe von Befestigungselementen (9) auf den entsprechenden freien Rändern der genannten entsprechenden Bodenteile (2);
wobei das genannte Verfahren **dadurch gekennzeichnet ist, dass** der genannte Schritt der Verbindung der genannten Abschnitte der genannten äußeren Trägerschale durch Kopplung bei gegenseitiger Überlagerung von Teilen (2') der beiden Träger-Halbschalen (1, 1'), die auf dem Bodenteil (2) jeder Träger-Halbschale (1, 1') vorgesehen sind, und/oder Überlagerung von Teilen (2') jeder Träger-Halbschale (1, 1') auf der Bodenwand (2) der angrenzenden Träger-Halbschale (1, 1') erzielt wird.

2. Verfahren zur Herstellung eines Kunststoffbeutels nach Anspruch 1, **dadurch gekennzeichnet, dass** der genannte vulkanisierbare gummiartige Werkstoff, aus dem die genannte Trägerschale besteht, aus mit Schwefel versetztem Ethylen-Vinylacetat besteht.

3. Verfahren zur Herstellung eines Kunststoffbeutels nach Anspruch 2, **dadurch gekennzeichnet, dass** der genannte Abformschritt der genannten äußeren Trägerschale bei insbesondere in einem Temperaturintervall zwischen 150°C und 200°C erwärmter genannter Form erfolgt und dabei das mit Schwefel versetzte genannte Ethylen-Vinylacetat insbesondere in einem Temperaturintervall von 60°C bis 100°C vorgewärmt eingespritzt wird; wobei das genannte mit Schwefel versetzte Ethylen-Vinylacetat während des genannten Abformschritts im Inneren der Abformkammer vulkanisiert.

4. Verfahren zur Herstellung eines Kunststoffbeutels nach Anspruch 1, **dadurch gekennzeichnet, dass** die genannte Hauptwand (5) mit mindestens einem ersten im Wesentlichen flachen Abschnitt ausgestattet ist und der genannte Bodenteil (2) mit mindestens einem zweiten im Wesentlichen flachen Abschnitt ausgestattet ist, zwischen dem der genannte Hohlraum (3) definiert bleibt; wobei die Entnahmerichtung (X) jeder Träger-Halbschale (1, 1') im Wesentlichen entlang der Winkelhalbierenden des genannten Hohlraums (3) in entgegengesetzter Richtung zur Wölbungsmitte des genannten Hohlraums (3) verläuft.

5. Verfahren zur Herstellung eines Kunststoffbeutels nach Anspruch 1, **dadurch gekennzeichnet, dass** der genannte Abformschritt durch Einspritzung des genannten Kunststoffs in die genannte Abformkammer (26) erfolgt, die von der die beiden Formhälften (22, 23) umfassenden genannten Form (21) und mindestens einem zusätzlichen Abformkörper (24) mit mindestens einer Einbuchtung (24') definiert wird und im Verhältnis zu einer ersten Formhälfte (22) der genannten beiden Formhälften (22, 23) zwischen einer operativen Position, in der während der Einspritzung und mit den genannten Formhälften (22, 23) die Abformkammer (26) begrenzt wird, und einer nicht operativen Position, in der sie von der genannten ersten Formhälfte (22) entfernt ist, um die genannte Formhälfte (1, 1') auf der genannten Einbuchtung (24') freizugeben, entlang einer im Wesentlichen sich entfernenden Richtung der Einbuchtung des genannten zusätzlichen Abformkörpers (24) von der genannten Formhälfte (22, 23) weg bewegt werden kann.

6. Verfahren zur Herstellung eines Kunststoffbeutels nach Anspruch 5, **dadurch gekennzeichnet, dass** nach dem genannten Entnahmeschritt die genannte Träger-Halbschale (1) einen Seitenwandabschnitt (4) mit einer im Verhältnis zum Außenprofil der genannten Seitenwand (4) nachgiebigen Einbuchtung (4') auf der genannten Einbuchtung (4') des genannten zusätzlichen Abformkörpers (24) der genannten Form (21) aufweist.

7. Kunststoffbeutel, der Folgendes umfasst:
- eine halbsteife äußere Trägerschale aus Ethylen-Vinylacetat-Schaum, ausgestattet mit zwei sich gegenüberliegenden Hauptwänden (5), mit mindestens einer aus einem Stück mit den genannten Hauptwänden (5) bestehenden und zu den Letzteren quer liegenden Bodenwand und einer der genannten Bodenwand gegenüberliegenden oberen Öffnung;
- einen im Inneren der genannten äußeren Trägerschale positionierten Aufbewahrungsbeutel (7) mit einer Öffnung auf der genannten oberen Öffnung der genannten äußeren Trägerschale;
wobei die genannte Trägerschale mindestens zwei miteinander gekoppelte Träger-Halbschalen (1, 1') umfasst, von denen jede mindestens eine der genannten Hauptwände (5) und mindestens ein Bodenteil (2) der genannten Bodenwand umfasst; wobei die genannten Träger-Halbschalen (1, 1') jede mit einem ersten freien Rand der Hauptwand (5) auf der oberen Öffnung und mit einem zweiten freien Rand des Bodenteils (2) ausgestattet sind; wobei die genannte Hauptwand (5) und der genannte Bodenteil (2) in einem Stück miteinander im Wesentlichen über einen Hohlraum (3) verbunden sind, der von dem genannten zweiten freien Rand des genannten Bodenteils (2) bis zu dem genannten ersten freien Rand der genannten Hauptwand (5) auf der genannten oberen Öffnung verläuft; wobei Befestigungselemente (9) vorgesehen sind, um zwischen sich Teile (2') zur Verbindung auf den genannten zweiten freien Rändern der genannten Bodenteile (2) jeder Träger-Halbschale (1, 1') zu verbinden;
wobei der genannte Kunststoffbeutel (10) **dadurch gekennzeichnet ist, dass** die genannten Teile (2') der genannten Bodenteile (2) der genannten Träger-Halbschalen (1, 1') mittels der genannten Befestigungselemente (9) bei gegenseitiger Überlagerung der Teile (2') der beiden Träger-Halbschalen (1, 1') und/oder Überlagerung der Teile (2') jeder Träger-Halbschale (1, 1') auf der Bodenwand (2) der angrenzenden Träger-Halbschale (1, 1') gekoppelt sind.

8. Kunststoffbeutel nach Anspruch 7, **dadurch gekennzeichnet, dass** jede Träger-Halbschale (1, 1') mindestens einen Seitenwandabschnitt (4) in einem Stück mit den genannten Hauptwänden (5) jeder Träger-Halbschale (1, 1') umfasst; wobei die genannten Seitenwandabschnitte (4) ein Seitenfenster zum Erkennen des Aufbewahrungsbeutels (7) von außerhalb der genannten Trägerschale definieren.

9. Kunststoffbeutel nach Anspruch 7, **dadurch gekennzeichnet, dass** die genannten Befestigungselemente (9) Verbindungselemente der folgenden Gruppe umfassen:
- Schnüre (11);
- Clips (12);
- Doppelpilzbefestigung;
- Bolzen mit umklappbaren Metallschellen;
- elastische Pilzbefestigung (13);
- Nieten;
- Spreiznieten (17);
- Schnappnieten (17');
- Reißnieten (15);
- Gewindenieten (16);
- Rundkopfnieten (18);
- Senkkopfnieten (19);
- Kunststoffband mit Zapfen (20).

## Revendications

1. Procédé de fabrication d'un sac en plastique, comprenant les étapes opérationnelles suivantes :
- une étape de moulage d'au moins une coquille de support en matériau caoutchouteux vulcanisable, par injection dudit matériau plastique dans au moins une enceinte de moulage (26) façonnée d'un moule (21) ;
- une étape d'insertion d'une poche porte-objets (7) au sein de ladite coquille de support ;
ladite étape de moulage comprenant au moins une première étape de moulage d'une première demi-coquille de support (1) et au moins une deuxième étape de moulage d'une deuxième demi-coquille de support (1') ; lesdites demi-coquilles de support (1, 1') étant équipées d'une paroi principale (5) et d'une portion de fond (2) raccordées l'une l'autre dans un corps unique grâce à une concavité (3) ;
lesdites première et deuxième étapes de moulage respectivement desdites première et deuxième demi-coquilles de support (1, 1') comprenant :
- une étape d'injection dudit matériau caoutchouteux vulcanisable dans ladite enceinte de moulage (26), laquelle enceinte de moulage (26) est définie entre au moins deux demi-moules (22, 23) placés dans une configuration de fermeture et présente une forme concave homologue à ladite concavité (3).
- une étape d'extraction, dans laquelle lesdits demi-moules sont déplacés de ladite configuration de fermeture vers une configuration d'ouverture, dans laquelle ledit matériau caoutchouteux vulcanisable n'est plus comprimé dans l'enceinte de moulage et augmente de volume de 15% à 60% avec détachement conséquent desdits demi-moules ; ladite étape d'extraction en prévoyant l'éloignement de ladite première demi-coquille de support (1) et de ladite deuxième demi-coquille de support (1') détachées desdits demi-moules en position ouverte ;
- une étape d'assemblage desdites demi-coquilles de support (1, 1') grâce à des moyens de fixation (9) en correspondance de relatifs bords dégagés desdites portions de fond correspondantes (2) ;
ledit procédé étant **caractérisé en ce que** ladite étape d'assemblage desdites portions de ladite coquille de support extérieure est obtenue par accouplement avec chevauchement réciproque de marges (2') des deux demi-coquilles de support (1, 1') prévues en correspondance de la portion de fond (2) de chaque demi-coquille de support (1, 1') et/ou chevauchement des marges (2') de chaque demi-coquille de support (1, 1') sur la paroi de fond (2), de la demi-coquille de support (1, 1') adjacente.

2. Procédé de fabrication d'un sac selon la revendication 1, **caractérisé en ce que** ledit matériau caoutchouteux vulcanisable dont se compose ladite coquille de support est de l'éthylène-acétate de vinyle additionné de soufre.

3. Procédé de fabrication d'un sac selon la revendication 2, **caractérisé en ce que** ladite étape de moulage de ladite coquille de support extérieure est réalisée par ledit moule chauffé notamment dans une plage de température comprise entre 150°C et 200°C, et avec ledit éthylène-acétate de vinyle additionné de soufre injecté préchauffé notamment dans une plage de température comprise entre 60°C e 100°C ; ledit éthylène-acétate de vinyle additionné de soufre vulcanisant au cours de ladite étape de moulage à l'intérieur de ladite enceinte de moulage.

4. Procédé de fabrication d'un sac selon la revendication 1, **caractérisé en ce que** ladite paroi principale (5) est équipée d'au moins une première portion sensiblement plate et ladite portion de fond (2) est équipée d'au moins une deuxième portion sensiblement plate dans laquelle est définie ladite concavité (3); la direction d'extraction (X) de chaque demi-coquille de support (1, 1') étant sensiblement le long de la bissectrice de ladite concavité (3), dans le sens opposé par rapport au centre de courbure de ladite concavité (3).

5. Procédé de fabrication d'un sac selon la revendication 1, **caractérisé en ce que** ladite étape de moulage est réalisée en injectant ledit matériau plastique dans ladite enceinte de moulage (26) définie par ledit moule (21) comprenant lesdits deux demi-moules (22, 23) et au moins un corps de moulage additionnel (24) équipé d'au moins un renfoncement (24') et mobile par rapport à un premier demi-moule (22) desdits deux demi-moules (22, 23), entre une position opérationnelle, dans laquelle pendant l'injection et avec lesdits demi-moules (22, 23) délimite l'enceinte de moulage (26) et une position non opérationnelle, dans laquelle il est éloigné dudit premier demi-moule (22) pour dégager ladite demi-coquille (1, 1') en correspondance dudit renfoncement (24'), le long d'une direction sensiblement d'éloignement du renfoncement dudit corps de moulage additionnel (24) dudit demi-moule (22, 23).

6. Procédé de fabrication d'un sac selon la revendication 5, **caractérisé en ce qu'**après ladite étape d'extraction, ladite demi-coquille de support (1) présente une portion de paroi latérale (4) équipée d'un renfoncement (4') mouvant élastiquement par rapport au profil extérieur de ladite paroi latérale (4), en correspondance dudit renfoncement (24') dudit corps de moulage additionnel (24) dudit moule (21).

7. Sac en plastique, comprenant :
- une coquille de support extérieure semi-rigide en éthylène-acétate de vinyle expansé, équipée de deux parois principales (5) face à face, d'au moins une paroi de fond dans un corps unique avec lesdites parois principales (5) et transversale par rapport à ces dernières et une ouverture supérieure opposée à ladite paroi de fond ;
- une poche porte-objets (7) positionnée à l'intérieur de ladite coquille de support extérieure, qui présente une ouverture en correspondance de ladite ouverture supérieure de ladite coquille de support extérieure ;
ladite coquille de support comprend au moins deux demi-coquilles de support (1, 1') accouplées, chacune desquelles comprend au moins une desdites parois principales (5) et au moins une portion de fond (2) de ladite paroi de fond ; lesdites demi-coquilles de support (1, 1') étant équipées, chacune, d'un premier bord dégagé de la paroi principale (5) en correspondance de l'ouverture supérieure et d'un deuxième bord dégagé de la portion de fond (2) ;
ladite paroi principale (5) et ladite portion de fond (2) étant en un corps unique connectées entre eux sensiblement par une concavité (3) qui s'étend depuis ledit deuxième bord dégagé de ladite portion de fond (2) jusqu'audit premier bord dégagé de ladite paroi principale (5) en correspondance de ladite ouverture supérieure ; des moyens de fixation (9) étant prévus pour assembler parmi eux des marges (2') d'assemblage placées en correspondance desdits deuxièmes bords dégagés desdites portions de fond (2) de chaque demi-coquille de support (1, 1')
ledit sac (10) étant **caractérisé en ce que** lesdites marges (2') desdites portions de fond (2) desdites demi-coquilles de support (1, 1') sont accouplées par des moyens de fixation (9) avec chevauchement réciproque des marges (2') des deux demi-coquilles de support (1, 1'), et/ou chevauchement des marges (2') de chaque demi-coquille de support (1, 1') sur la paroi de fond (2) de la demi-coquille de support (1, 1') adjacente.

8. Sac selon la revendication 7, **caractérisé en ce que** chaque demi-coquille de support (1, 1') comprend au moins une portion de paroi latérale (4) en corps unique avec lesdites parois principales (5) de chaque demi-coquille de support (1, 1'), lesdites portions de paroi latérale (4) définissant une fenêtre latérale, pour l'affichage de la poche porte-objets (7) depuis l'extérieur de ladite coquille de support.

9. Sac selon la revendication 7, **caractérisé en ce que** lesdits moyens de fixation (9) comprennent des moyens de connexion du groupe comprenant des :
- lacets (11) ;
- clips (12
- doubles champignons ;
- pivots à colliers métalliques repliables ;
- champignons élastiques (13) ;
- rivets ;
- rivets à expansion (17) ;
- rivets à cliquet (17') ;
- rivets à déchirure (15) ;
- rivets filetés (16) ;
- rivets à tête ronde (18) ;
- rivets à tête fraisée (19) ;
- bande plastique équipée de pivots (20).
